# EUROPEAN PATENT SPECIFICATION

(11) **EP 4 507 915 B1**
(45) Date of publication and mention of the grant of the patent: **28.01.2026**
(21) Application number: 23714852.3
(22) Date of filing: 04.04.2023
(51) Int. Cl.: B60H 1/34, B60K 35/50, B60K 37/20, B62D 25/14

(54) **A MOTOR-VEHICLE DASHBOARD, AIR VENT AND RELATIVE POSITIONING ADAPTER BODY**
ARMATURENBRETT FÜR KRAFTFAHRZEUGE, ENTLÜFTUNGSVORRICHTUNG UND RELATIV ZUEINANDER POSITIONIERBARER ADAPTERKÖRPER
TABLEAU DE BORD DE VÉHICULE AUTOMOBILE, ÉVENT ET CORPS D'ADAPTATEUR DE POSITIONNEMENT RELATIF

(30) Priority: 12.04.2022 IT 202200007235
(43) Date of publication of application: 19.02.2025
(73) Proprietor: Stellantis Europe S.p.A., 10135 Torino (TO) (IT)
(72) Inventor: BATTISTA, Francesco, 10135 Torino (IT)
(74) Representative: Buzzi, Notaro & Antonielli d'Oulx S.p.A.
(86) International application number: PCT/IT2023/050097
(87) International publication number: WO 2023/199366

(56) References cited:
- DE-C1- 19 924 493
- FR-A1- 3 006 981
- FR-A1- 3 068 918

## Description

### Field of the invention

The present invention generally relates to the field of motor-vehicle interiors and more particularly it relates to a solution for mounting the air vents of a motor-vehicle dashboard.

### Prior art

As known, motor-vehicle interiors have an instrument-holder dashboard designed to arrange various components/instruments, such as, for example, finishing panels, push-button panels, adjustment cursors, the instrument panel, the radio/satellite navigation system, etc. The dashboard is also provided with at least one air vent connected to a heating and air conditioning system. The vent comprises an emission channel for an airflow and means for controlling the direction of the outflow.

Typically, the vents are hooked to support inserts embedded within the structure of the dashboard comprising a support body generally made of plastic material, and possibly a coating layer. Document FR 3 006 981 B1 illustrates a solution for arranging air vents integrated into the dashboard, which makes it possible to secure the vent to the dashboard in the event of activation of the airbag safety device. By considering documents DE19924493,

FR3068918**, t**he present invention starts from the desire to propose a motor-vehicle dashboard and a relative solution for mounting the air vents, which is equally applicable on different motor-vehicle models, defining different overall dimensions and installation spaces, using air vents of the same type and size.

### Object of the invention

The object of the present invention is to make a dashboard available inside the passenger compartment of a motor-vehicle, which bears a constructive solution that is particularly flexible, allowing the mounting of air vents of the same type on different dashboards with different dimensions and installation spaces.

A further object of the invention is to provide this solution with relatively simple to implement and low-cost means.

A further object of the invention is to provide this solution with means that ensure the strength and reliability of the components.

### Summary of the invention

These aims are achieved by means of a motor-vehicle dashboard, comprising:
- a shaped support body provided with at least one fixing seat for positioning and fixing a ventilation unit arranged for providing an airflow towards the motor-vehicle interior,
- wherein said ventilation unit comprises a support and flow-guide body, an air vent and adjustment means for adjusting the direction of the airflow,
- a positioning adapter body rigidly connected to the shaped support body at the fixing seat, and arranged to selectively receive said ventilation unit,
- wherein the positioning adapter body is a ring-shaped support flange comprising a main opening and a plurality of fastening and support elements for rigidly and coaxially connecting the positioning adapter body to the seat and the ventilation unit to the positioning adapter body, so that the support body protrudes inwards of the dashboard, through the main opening of the positioning adapter body,
- wherein the positioning adapter body comprises a main ring portion from which a plurality of extension portions extend, provided with said fastening and support elements,
- wherein the positioning adapter body comprises respective grooves provided along the circumferential surface defining the main opening and arranged for centering the ventilation unit within the main opening,
- wherein the positioning adapter body comprises a plurality of centering holes along the extension portions, arranged to selectively receive respective centering elements of the support body,
- wherein the positioning adapter body comprises a plurality of fastening holes arranged to receive respective fastening elements of the support body,
- wherein the positioning adapter body defines an abutment and fixing surface for the air vent, so as to enable assembling of ventilation units of the same type on different dashboards defining different dimensions and installation spaces.

Further advantageous characteristics of the invention are defined in the attached claims and in the description that follows.

The embodiments also relate to a method for assembling an air vent on a motor-vehicle dashboard according to the characteristics mentioned above.

### Brief description of the figures

Further characteristics and advantages of the invention will become apparent from the description that follows with reference to the attached drawings, provided purely by way of non-limiting example, wherein:
- Figure 1 is a perspective view of a motor-vehicle instrument-holder dashboard, according to a preferred embodiment,
- Figure 2 is an exploded perspective view that illustrates some components of the previous Figure,
- Figures 3, 4 are perspective views from different angles of a positioning adapter body for an air vent, according to an embodiment of the invention,
- Figure 5 is a perspective view illustrating the adapter body in the condition installed on the dashboard,
- Figure 6 is an exploded perspective view showing the air vent and the adapter body integrated in the dashboard,
- Figure 7 is a front view illustrating the embodiment of Figure 6 in the assembled condition, and
- Figure 8 is a cross-sectional view along the line I-I of Figure 1,

### Detailed description of more embodiments

In the following description various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments. The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not therefore delimit the field of protection or the scope of the embodiments.

Reference 1 indicates - as a whole - a motor-vehicle interior instrument-holder dashboard. The instrument-holder dashboard 1 is mounted, in use, on a suitable support structure (not shown) carried by a portion of the chassis of the motor-vehicle (not shown). The dashboard 1 extends across the entire width of the passenger compartment of the motor-vehicle and is modeled to perform various functions, including making the instrument panel available for use, along with various push-button panels, adjustment cursors, the radio/satellite navigator system, etc. The dashboard 1 may be formed by an injection molded shell body, in plastic material, optionally covered in polyvinyl chloride (PVC) or polyurethane (PU) or thermoplastic polyolefin (TPO) or leather, etc.

In the attached drawings, reference 4 indicates - as a whole - a ventilation unit supported by the dashboard 1 and arranged to direct an airflow towards the inside of the motor-vehicle, in particular towards the passengers. The unit 4 comprises an air vent 5 and adjustment means 6 for autonomously adjusting the direction of the flow; the air vent 5 comprises a support and guide body 18, substantially cylindrical in shape, arranged to channel an airflow towards the outlet of the vent 5. The dashboard 1 comprises respective ventilation units 4 arranged on the driver's side and on the passenger side; the invention is equally applicable to both units 4.

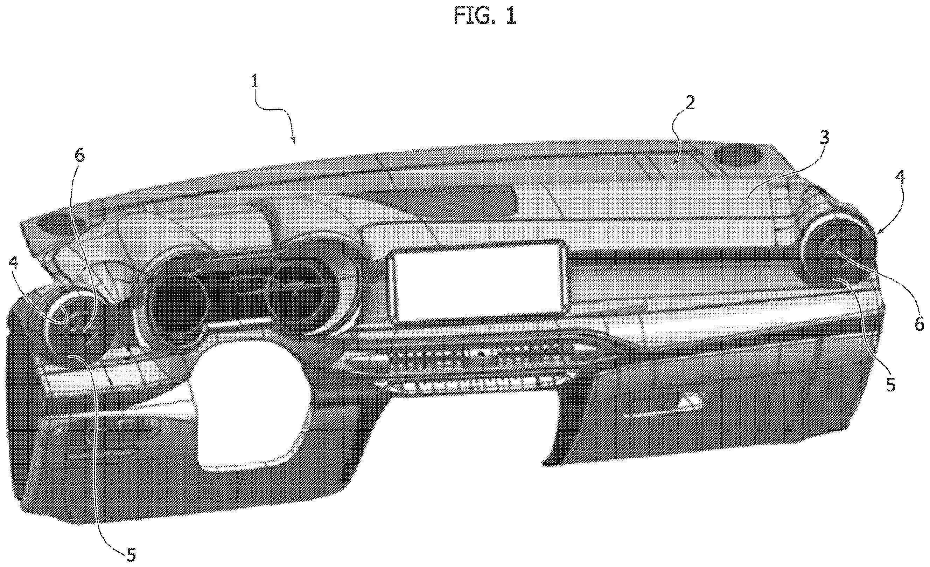

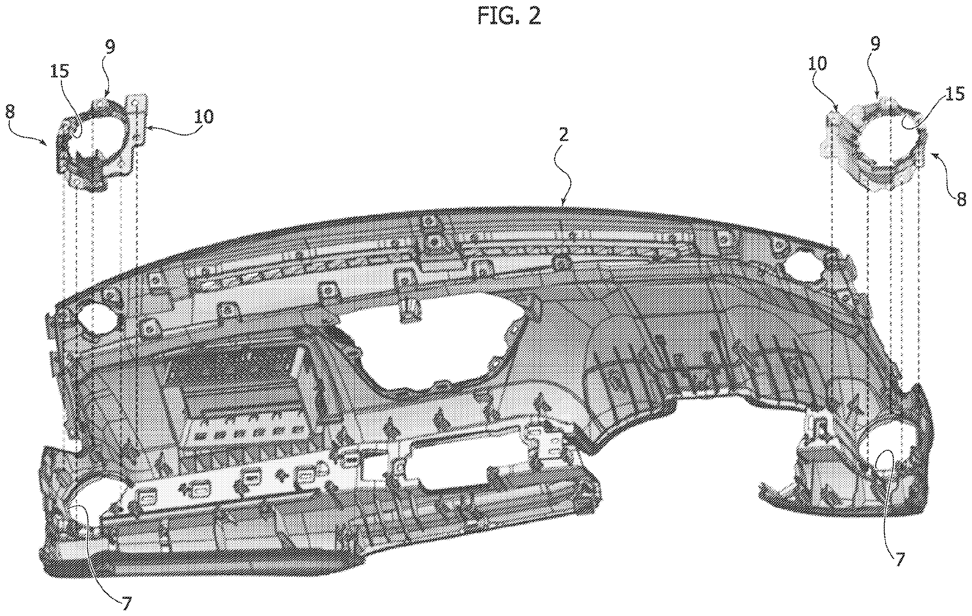

As illustrated in Figure 2, the instrument-holder dashboard 1 essentially comprises a shaped support body 2, preferably made of plastic material, which is provided with suitable fastening elements, such as pins and centering elements, capable of allowing the correct positioning and fastening of the shaped support body on a support structure not illustrated. The shaped support body 2 may be formed in one piece or from several parts suitably coupled together. Figure 2 shows an example of a shaped support body 2 comprising a passenger side portion, a central portion including a central compartment arranged for the installation of an infotainment system, and a peripheral portion on the driver's side. As known, the dashboard 1 may comprise decorative panels and/or finishing elements 3 (illustrated in Figure 1) applied to the shaped support body 2, so as to give the instrument-holder dashboard 1 the required aesthetic connotation according to the motor-vehicle model.

Returning to the ventilation units 4, the shaped support body 2 comprises peripheral portions wherein fixing seats 7 are obtained for respectively positioning and fixing a ventilation unit 4.

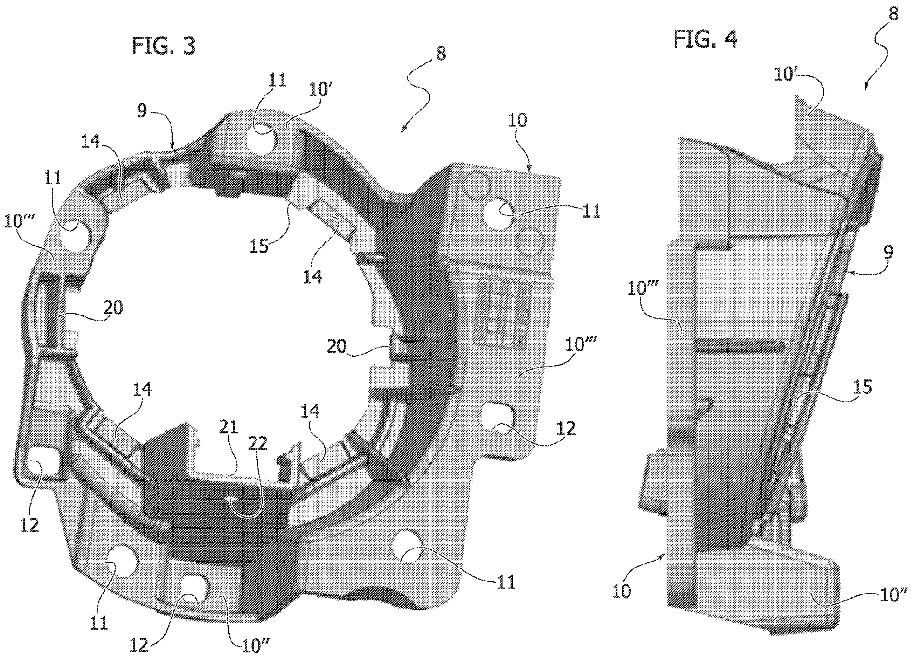

According to an important characteristic of the invention, the motor-vehicle dashboard 1 comprises a positioning adapter body 8 rigidly connected to the fixing seat 7 and arranged to selectively receive and block a ventilation unit 4. As illustrated in Figures 3, 4, the positioning adapter body 8 is a ring-shaped support flange, comprising a main opening 15 and a plurality of fastening and support elements - described below - obtained along the surfaces of the adapter body 8, to rigidly connect and lock the ventilation unit 4 to the adapter body 8 and into the seat 7. In other words, according to the invention, the ventilation unit 4 is indirectly connected to the shaped support body 2, since it is connected to the positioning adapter body 8, which is in turn fixed at the seat 7 of the shaped support body 2.

In one or more embodiments, the positioning adapter body 8 is shaped in a single piece of polypropylene (for example, polypropylene with mineral - talc "PP TD25"), so as to be particularly light and - at the same time - resistant. Alternatively, the positioning adapter body 8 is made of polycarbonate, for example, polycarbonate/acrylonitrile-butadiene-styrene ("PC+ABS"). Preferably, the adapter body has a total weight of about 0.05 kg.

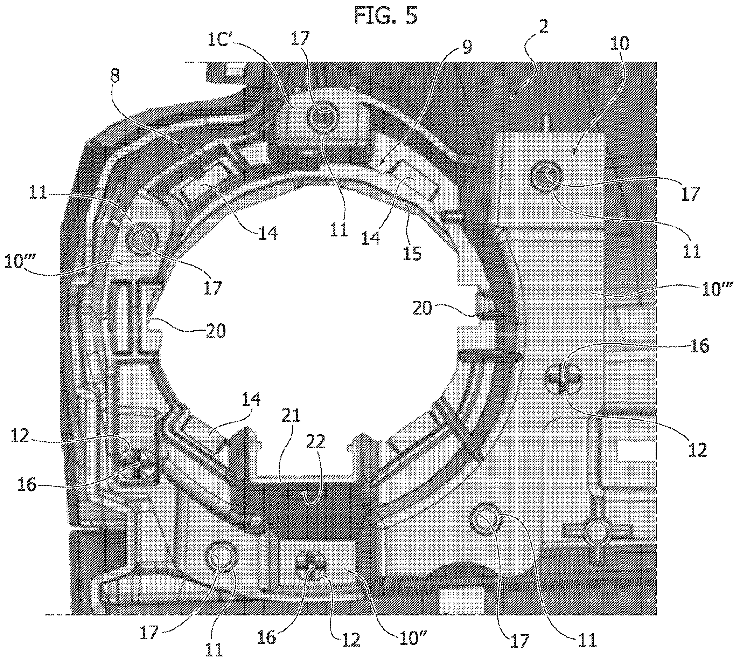

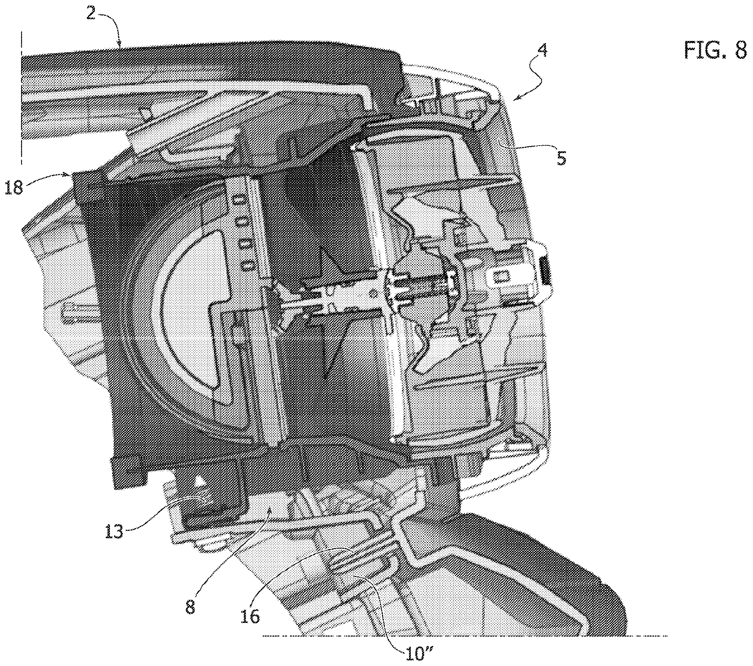

According to the assembled configuration illustrated in Figures 5-8 , the ventilation unit 4 is coaxially connected within the seat 7 and the main opening 15 of the positioning adapter body 8, so that the support and guide body 18 projects towards the inside of the dashboard 1, through the positioning adapter body 8. In the assembled configuration illustrated in particular in the cross-sectional view of Figure 8 (cross-section along the line I-I of Figure 1), the positioning adapter body 8 defines an abutment surface for the vent 5, which is located on a different plane with respect to a plane defining the seat 7. As is evident, the plane is in a more external position (towards the outer front surface of the dashboard 1) with respect to the plane of the seat 7.

As indicated above, the positioning adapter body 8 is a ring-shaped support flange, comprising a main opening 15 and a plurality of fastening and support elements. More specifically, the positioning adapter body 8 comprises a ring-shaped main portion 9 from which a plurality of extension portions 10 extend, equipped with various fastening and support points. The main ring portion 9 comprises a plurality of reinforcing ribs and various seats arranged to receive the support and guide body 18 of the air vent 5. In more detail, the extension portions 10 have respective front surfaces offset with respect to the surface defining the main ring portion 9. In one or more embodiments, the positioning adapter body 8 comprises upper and lower extension portions 10', 10", wherein the terms upper and lower refer to an assembled condition of the adapter body 8 and of the ventilation unit 4 within the dashboard 1, as shown in Figure 1. The lower extension portion 10" comprises a body substantially protruding towards the outer surface of the shaped support body 2 (Figure 8). Furthermore, the adapter body 8 comprises lateral extension portions 10‴, so as to form a single continuous body with extension portions arranged around the ring portion 9.

Figure 5 is a front view illustrating the positioning adapter body 8 fixed on the shaped support body 2 at the seat 7. In this regard, the positioning adapter body 8 has, along the extension portions 10', 10", 10‴, a plurality of centering holes 12, arranged to selectively receive respective centering elements 16 of the support body 2 (for example, integrated in the shaped support body 2). In accordance with the illustrated embodiment, the centering holes 12 are obtained on the lower and lateral extension portions 10",10"'. Preferably the lower extension portion 10" comprises a central centering hole 12 and the lateral portions 10‴ have, respectively, a centering hole 12, arranged at the sides of the central hole 12 at different heights. Furthermore, the positioning adapter body 8 comprises a plurality of fixing holes 11 arranged to receive respective fastening elements 17 of the body 2 (for example, integrated in the shaped support body 2). Preferably, the fastening elements 17 are welded to the positioning adapter body 8, at the fastening points 11. According to the illustrated embodiment, the fastening holes 11 are obtained along the extension of the upper, lower and lateral extension portions 10', 10", 10"'.

Once the positioning adapter body 8 is fixed to the shaped support body 2 at the seat 7, the ventilation unit 4 may be integrated into the dashboard 1, rigidly connecting the ventilation unit 4 to the positioning adapter body 8. In this regard, the positioning adapter body 8 has, along the circumferential surface which defines the main ring-shaped opening 15, respective grooves 20, 21 arranged for centering the ventilation unit 4 within the main opening 15. More specifically, the positioning adapter body 8 comprises a pair of lateral grooves 20, and a lower grooved portion 21, arranged to receive the support body 18.

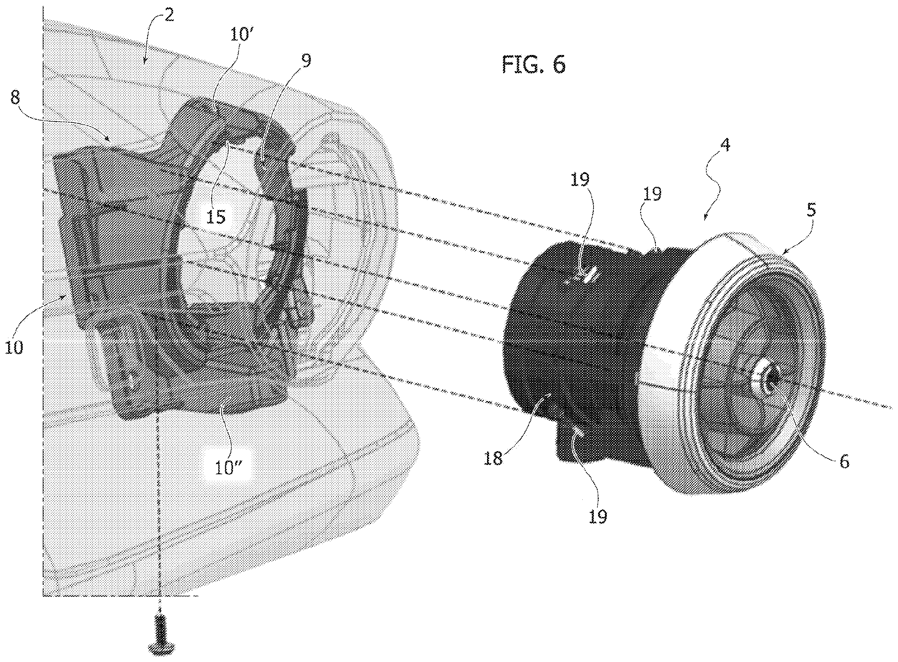

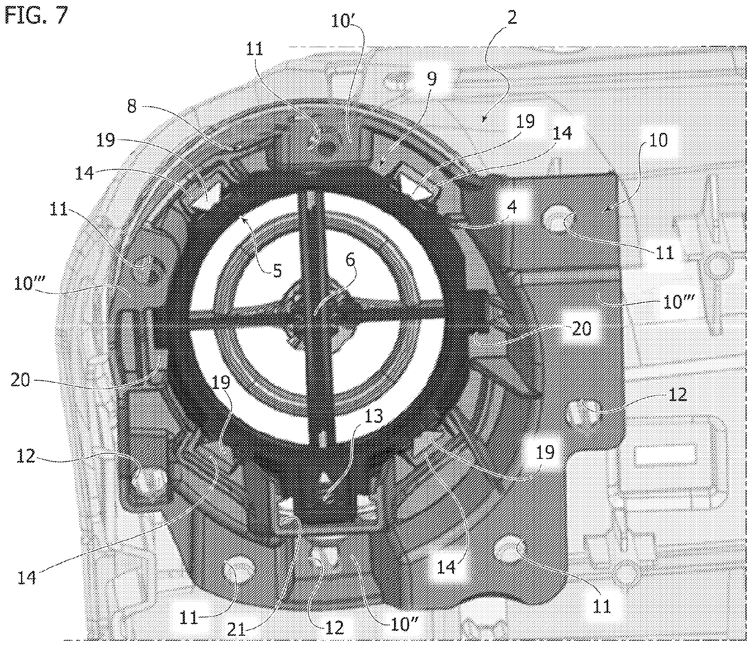

Furthermore, as illustrated in Figures 6, 7, the ventilation unit 4 comprises snap means 19 mutually engageable with respective abutment surfaces 14 of the positioning adapter body 8. The snap means 19 are obtained along the outer surface of the support body 18. In the embodiment illustrated in the drawings, the snap means 19 are flexible arms arranged along the surface of the support body 18, wherein the flexible arms have a central symmetry arrangement with respect to a pair of perpendicular main axes of the body 18, with four flexible arms arranged substantially equally spaced along the cylindrical surface of the support body 18.

Thanks to the characteristics indicated above, the ventilation unit 4 is constrained to the dashboard 1 and to the positioning adapter body 8 along three mutually orthogonal directions, in particular along the axial direction of the ventilation units 4 thanks to the welding points made at the holes 11, along a vertical direction thanks to the lower groove 21 and along a horizontal direction from one side of the passenger compartment to the other thanks to the lateral grooves 20, as well as thanks to the snap means 19.

According to a further preferred characteristic of the invention, a fixing point 22 is obtained at the lower grooved portion 21 for the arrangement of safety fixing means 13 arranged to further constrain a lower portion of the ventilation unit 4. The fixing means 13 may comprise a safety screw. Thanks to this characteristic, if an airbag safety device integrated in the dashboard 1 is activated, the safety fixing means 13 guarantee locking of the vent 5 in its position, without the risk that the vent may come out of its seat 7 and hit a passenger.

Of course, the basic principles of the invention remaining the same, the construction details and embodiments may vary widely with respect to what has been described and illustrated purely by way of example, without thereby departing from the scope of the present invention as defined by the attached claims.

## Claims

1. A motor-vehicle dashboard (1), comprising:
- a shaped support body (2) provided with at least one fixing seat (7) for positioning and fixing a ventilation unit (4) arranged for providing an airflow towards the motor-vehicle interior,
- wherein said ventilation unit (4) comprises a support and flow-guide body (18), an air vent (5) and adjustment means (6) for adjusting the direction of the airflow,
- a positioning adapter body (8) rigidly connected to the shaped support body (2) at the fixing seat (7), and arranged to selectively receive said ventilation unit (4),
- wherein the positioning adapter body (8) is a ring-shaped support flange comprising a main opening (15) and a plurality of fastening and support elements for rigidly and coaxially connecting the positioning adapter body (8) to the seat (7) and the ventilation unit (4) to the positioning adapter body (8), so that the support and flow-guide body (18) protrudes inwards of the dashboard (1), through the main opening (15) of the positioning adapter body (8),
- wherein the positioning adapter body (8) comprises a main ring portion (9) from which extend a plurality of extension portions (10) provided with said fastening and support elements,
**characterized in that** the positioning adapter body (8) comprises:
- respective grooves (20, 21) provided along the circumferential surface defining the main opening (15) and arranged for centering the ventilation unit (4) within the main opening (15),
- a plurality of centering holes (12) provided along the extension portions (10), arranged to selectively receive respective centering elements (16) of the support body (2),
- a plurality of fastening holes (11) arranged to receive respective fastening elements (17) of the support body (2),
- wherein the positioning adapter body (8) defines an abutment and fixing surface for the air vent (5), so as to enable assembling of ventilation units (4) of the same type on different dashboards (1) defining different dimensions and installation spaces.

2. A motor-vehicle dashboard (1) according to claim 1, wherein the extension portions (10) have respective front surfaces arranged in offset positions with respect to the surface defining the main ring portion (9).

3. A motor-vehicle dashboard (1) according to claims 1 or 2, wherein the main ring portion (9) comprises a plurality of reinforcing ribs and seats arranged to receive the support and flow-guide body (18) of the air vent (5).

4. A motor-vehicle dashboard (1) according to any of the previous claims, wherein the positioning adapter body (8) comprises upper and lower extension portions (10',10"), wherein the lower extension portion (10") comprises a body substantially protruding towards the outer surface of the shaped support body (2), and lateral extension portions (10‴) so as to form a single continuous body with extension portions (10', 10", 10‴) arranged around the ring portion (9).

5. A motor-vehicle dashboard (1) according to claim 4, wherein the centering holes (12) are made at the lower and lateral extension portions (10", 10"'), wherein the lower extension portion (10") comprises a central centering hole (12) and each of the lateral portions (10‴) have a further centering hole (12).

6. A motor-vehicle dashboard (1) according to claim 4 or 5, wherein the fastening elements (17) are welded to the positioning adapter body (8), at the fastening points (11) obtained along the extension of the upper, lower and lateral extension portions (10', 10", 10"').

7. A motor-vehicle dashboard (1) according to any of the previous claims, wherein said grooves (20, 21) comprises a pair of lateral grooves (20), and a lower grooved portion (21), arranged to receive the support body (18).

8. A motor-vehicle dashboard (1) according to any of the previous claims, wherein the ventilation unit (4) comprises snap-fit means (19) formed along the outer surface of the support and flow-guide body (18), mutually engageable with respective abutment surfaces (14) of the positioning adapter body (8).

9. A motor-vehicle dashboard (1) according to claim 7, wherein a fixing point (22) is provided at the lower grooved portion (21) for the provision of safety fixing means (13) configured to further constrain a lower portion of the ventilation unit (4) to the adapter body (8), in order to ensure locking of the air vent (5).

10. A method for assembling a motor-vehicle dashboard (1) according to any of the previous claims, comprising the following steps:
- providing a shaped support body (2) comprising at least one fixing seat (7) for positioning and fixing a ventilation unit (4) arranged for providing an airflow towards the motor-vehicle interior,
- providing said ventilation unit (4) and said positioning adapter body (8),
- assembling the adapter body (8) to the shaped support body (2), following a foaming method to produce the shaped body (2),
- rigidly connecting the ventilation unit (4) to the positioning adapter body (8), so as to lock the air vent (5) along three mutually orthogonal directions, within the main opening (15) of the adapter body (8) fixed within the seat (7).

## Patentansprüche

1. Armaturenbrett (1) für ein Kraftfahrzeug, umfassend:
- einen geformten Tragkörper (2), der mit mindestens einem Befestigungssitz (7) zum Positionieren und Befestigen einer Lüftungseinheit (4) versehen ist, die dazu eingerichtet ist, einen Luftstrom in Richtung des Kraftfahrzeuginnenraums bereitzustellen,
- wobei die Lüftungseinheit (4) einen Stütz- und Strömungsleitkörper (18), eine Belüftungsdüse (5) und Einstellmittel (6) zum Einstellen der Richtung des Luftstroms umfasst,
- einen Positionierungsadapterkörper (8), der starr mit dem geformten Tragkörper (2) am Befestigungssitz (7) verbunden und dazu eingerichtet ist, die Lüftungseinheit (4) selektiv aufzunehmen,
- wobei der Positionierungsadapterkörper (8) ein ringförmiger Stützflansch ist, der eine Hauptöffnung (15) und eine Vielzahl von Befestigungs- und Stützelementen zum starren und koaxialen Verbinden des Positionierungsadapterkörpers (8) mit dem Sitz (7) und der Lüftungseinheit (4) mit dem Positionierungsadapterkörper (8) derart umfasst, dass der Stütz- und Strömungsleitkörper (18) durch die Hauptöffnung (15) des Positionierungsadapterkörpers (8) nach innen in das Armaturenbrett (1) hineinragt,
- wobei der Positionierungsadapterkörper (8) einen Hauptringabschnitt (9) umfasst, von dem sich eine Vielzahl von Verlängerungsabschnitten (10) erstrecken, die mit den Befestigungs- und Stützelementen versehen sind,
**dadurch gekennzeichnet, dass** der Positionierungsadapterkörper (8) umfasst:
- jeweilige Nuten (20, 21), die entlang der die Hauptöffnung (15) definierenden Umfangsfläche vorgesehen und zum Zentrieren der Lüftungseinheit (4) innerhalb der Hauptöffnung (15) ausgestaltet sind,
- eine Vielzahl von Zentrierlöchern (12), die entlang der Verlängerungsabschnitte (10) vorgesehen und zum selektiven Aufnehmen entsprechender Zentrierelemente (16) des Tragkörpers (2) ausgestaltet sind,
- eine Vielzahl von Befestigungslöchern (11), die zum Aufnehmen entsprechender Befestigungselemente (17) des Tragkörpers (2) ausgestaltet sind,
- wobei der Positionierungsadapterkörper (8) eine Auflage- und Befestigungsfläche für die Belüftungsdüse (5) definiert, um die Montage von Belüftungseinheiten (4) desselben Typs an verschiedene Armaturenbretter (1) zu ermöglichen, die verschiedene Abmessungen und Einbauräume definieren.

2. Armaturenbrett (1) für ein Kraftfahrzeug nach Anspruch 1, wobei die Verlängerungsabschnitte (10) jeweilige vordere Oberflächen aufweisen, die in gegenüber der den Hauptringabschnitt (9) definierenden Oberfläche versetzten Positionen angeordnet sind.

3. Armaturenbrett (1) für ein Kraftfahrzeug nach Anspruch 1 oder 2, wobei der Hauptringabschnitt (9) eine Vielzahl von Verstärkungsrippen und Aufnahmen umfasst, die zum Aufnehmen des Stütz- und Strömungsleitkörpers (18) der Belüftungsdüse (5) ausgestaltet sind.

4. Armaturenbrett (1) für ein Kraftfahrzeug nach einem der vorhergehenden Ansprüche, wobei der Positionierungsadapterkörper (8) obere und untere Verlängerungsabschnitte (10', 10"), wobei der untere Verlängerungsabschnitt (10") einen Körper umfasst, der im Wesentlichen in Richtung der Außenfläche des geformten Tragkörpers (2) vorsteht, und seitliche Verlängerungsabschnitte (10"') umfasst, um einen einzigen durchgehenden Körper mit um den Ringabschnitt (9) angeordneten Verlängerungsabschnitten (10', 10", 10"') zu bilden.

5. Armaturenbrett (1) für ein Kraftfahrzeug nach Anspruch 4, wobei die Zentrierlöcher (12) an den unteren und seitlichen Verlängerungsabschnitten (10", 10"') ausgebildet sind, wobei der untere Verlängerungsabschnitt (10") ein zentrales Zentrierloch (12) umfasst und jeder der seitlichen Abschnitte (10"') ein weiteres Zentrierloch (12) aufweist.

6. Armaturenbrett (1) für ein Kraftfahrzeug nach Anspruch 4 oder 5, wobei die Befestigungselemente (17) an den Befestigungspunkten (11), die entlang der Ausdehnung der oberen, unteren und seitlichen Verlängerungsabschnitte (10', 10", 10"') erhalten sind, an den Positionierungsadapterkörper (8) geschweißt sind.

7. Armaturenbrett (1) für ein Kraftfahrzeug nach einem der vorhergehenden Ansprüche, wobei die Nuten (20, 21) ein Paar seitlicher Nuten (20) und einen unteren genuteten Abschnitt (21) umfassen, die zum Aufnehmen des Tragkörpers (18) ausgestaltet sind.

8. Armaturenbrett (1) für ein Kraftfahrzeug nach einem der vorhergehenden Ansprüche, wobei die Lüftungseinheit (4) Schnappverbindungsmittel (19) umfasst, die entlang der Außenfläche des Stütz- und Strömungsleitkörpers (18) ausgebildet sind und wechselseitig mit den entsprechenden Auflageflächen (14) des Positionierungsadapterkörpers (8) in Eingriff gebracht werden können.

9. Armaturenbrett (1) für ein Kraftfahrzeug nach Anspruch 7, wobei ein Befestigungspunkt (22) an dem unteren genuteten Abschnitt (21) für die Bereitstellung von Sicherheitsbefestigungsmitteln (13) vorgesehen ist, die dazu ausgestaltet sind, einen unteren Abschnitt der Lüftungseinheit (4) weiter an dem Adapterkörper (8) einzuschränken, um eine Verriegelung der Belüftungsdüse (5) sicherzustellen.

10. Verfahren zum Montieren eines Armaturenbretts (1) für ein Kraftfahrzeug nach einem der vorhergehenden Ansprüche, das die folgenden Schritte umfasst:
- Bereitstellen eines geformten Tragkörpers (2), der mindestens einen Befestigungssitz (7) zum Positionieren und Befestigen einer Lüftungseinheit (4) umfasst, die dazu eingerichtet ist, einen Luftstrom in Richtung des Kraftfahrzeuginnenraums bereitzustellen,
- Bereitstellen der Lüftungseinheit (4) und des Positionierungsadapterkörpers (8),
- Montieren des Adapterkörpers (8) an den geformten Tragkörper (2) im Anschluss an ein Schäumungsverfahren zum Herstellen des geformten Körpers (2),
- starres Verbinden der Lüftungseinheit (4) mit dem Positionierungsadapterkörper (8), um die Belüftungsdüse (5) entlang von drei zueinander orthogonalen Richtungen innerhalb der Hauptöffnung (15) des innerhalb des Sitzes (7) fixierten Adapterkörpers (8) zu arretieren.

## Revendications

1. Tableau de bord (1) de véhicule automobile, comprenant :
- un corps de support mis en forme (2) pourvu d'au moins un siège de fixation (7) pour positionner et fixer une unité de ventilation (4) agencée pour fournir un flux d'air vers l'intérieur du véhicule automobile,
- dans lequel ladite unité de ventilation (4) comprend un corps de support et de guidage de flux (18), une bouche d'air (5) et des moyens de réglage (6) pour régler la direction du flux d'air,
- un corps d'adaptateur de positionnement (8) relié de manière rigide au corps de support mis en forme (2) au niveau du siège de fixation (7), et agencé pour recevoir de manière sélective ladite unité de ventilation (4),
- dans lequel le corps d'adaptateur de positionnement (8) est une bride de support en forme d'anneau comprenant une ouverture principale (15) et une pluralité d'éléments d'attache et de support pour relier de manière rigide et coaxiale le corps d'adaptateur de positionnement (8) au siège (7) et l'unité de ventilation (4) au corps d'adaptateur de positionnement (8), de sorte que le corps de support et de guidage de flux (18) fasse saillie vers l'intérieur du tableau de bord (1), à travers l'ouverture principale (15) du corps d'adaptateur de positionnement (8),
- dans lequel le corps d'adaptateur de positionnement (8) comprend une partie annulaire principale (9) à partir de laquelle s'étendent une pluralité de parties d'extension (10) pourvues desdits éléments d'attache et de support,
**caractérisé en ce que** le corps d'adaptateur de positionnement (8) comprend :
- des rainures respectives (20, 21) prévues le long de la surface circonférentielle définissant l'ouverture principale (15) et agencées pour centrer l'unité de ventilation (4) dans l'ouverture principale (15),
- une pluralité de trous de centrage (12) prévus le long des parties d'extension (10), agencés pour recevoir de manière sélective des éléments de centrage respectifs (16) du corps de support (2),
- une pluralité de trous d'attache (11) agencés pour recevoir des éléments d'attache respectifs (17) du corps de support (2),
- dans lequel le corps d'adaptateur de positionnement (8) définit une surface de butée et de fixation pour la bouche d'air (5), de manière à permettre l'assemblage d'unités de ventilation (4) du même type sur différents tableaux de bord (1) définissant différentes dimensions et différents espaces d'installation.

2. Tableau de bord (1) de véhicule automobile selon la revendication 1, dans lequel les parties d'extension (10) ont des surfaces avant respectives agencées dans des positions décalées par rapport à la surface définissant la partie annulaire principale (9).

3. Tableau de bord (1) de véhicule automobile selon les revendications 1 ou 2, dans lequel la partie annulaire principale (9) comprend une pluralité de nervures de renfort et des sièges agencés pour recevoir le corps de support et de guidage de flux (18) de la bouche d'air (5).

4. Tableau de bord (1) de véhicule automobile selon l'une des revendications précédentes, dans lequel le corps d'adaptateur de positionnement (8) comprend des parties d'extension supérieure et inférieure (10', 10"), dans lequel la partie d'extension inférieure (10") comprend un corps faisant saillie sensiblement vers la surface externe du corps de support mis en forme (2), et des parties d'extension latérales (10"') de manière à former un seul corps continu avec des parties d'extension (10', 10", 10"') agencées autour de la partie annulaire (9).

5. Tableau de bord (1) de véhicule automobile selon la revendication 4, dans lequel les trous de centrage (12) sont réalisés au niveau des parties d'extension inférieure et latérales (10", 10"'), dans lequel la partie d'extension inférieure (10") comprend un trou de centrage central (12) et chacune des parties latérales (10"') a un trou de centrage supplémentaire (12).

6. Tableau de bord (1) de véhicule automobile selon la revendication 4 ou 5, dans lequel les éléments d'attache (17) sont soudés au corps d'adaptateur de positionnement (8), aux points d'attache (11) obtenus le long de l'extension des parties d'extension supérieure, inférieure et latérales (10', 10", 10"').

7. Tableau de bord (1) de véhicule automobile selon l'une des revendications précédentes, dans lequel lesdites rainures (20, 21) comprennent une paire de rainures latérales (20) et une partie rainurée inférieure (21), agencées pour recevoir le corps de support (18).

8. Tableau de bord (1) de véhicule automobile selon l'une des revendications précédentes, dans lequel l'unité de ventilation (4) comprend des moyens d'ajustement par serrage (19) formés le long de la surface externe du corps de support et de guidage de flux (18), pouvant s'engager mutuellement avec des surfaces de butée respectives (14) du corps d'adaptateur de positionnement (8).

9. Tableau de bord (1) de véhicule automobile selon la revendication 7, dans lequel un point de fixation (22) est prévu au niveau de la partie rainurée inférieure (21) pour la mise en place de moyens de fixation de sécurité (13) configurés pour contraindre davantage une partie inférieure de l'unité de ventilation (4) contre le corps d'adaptateur (8), afin d'assurer le verrouillage de la bouche d'air (5).

10. Procédé d'assemblage d'un tableau de bord (1) de véhicule automobile selon l'une des revendications précédentes, comprenant les étapes suivantes :
- la fourniture d'un corps de support mis en forme (2) comprenant au moins un siège de fixation (7) pour positionner et fixer une unité de ventilation (4) agencée pour fournir un flux d'air vers l'intérieur du véhicule automobile,
- la fourniture de ladite unité de ventilation (4) et dudit corps d'adaptateur de positionnement (8),
- l'assemblage du corps d'adaptateur (8) au corps de support mis en forme (2), en suivant un procédé de moussage pour produire le corps mis en forme (2),
- la liaison rigide de l'unité de ventilation (4) au corps d'adaptateur de positionnement (8), de manière à verrouiller la bouche d'air (5) selon trois directions mutuellement orthogonales, dans l'ouverture principale (15) du corps d'adaptateur (8) fixé dans le siège (7).
